(19) Europäisches Patentamt
European Patent Office
Office européen des brevets

(11) **EP 2 333 444 A1**

(12) **EUROPEAN PATENT APPLICATION**
published in accordance with Art. 153(4) EPC

(43) Date of publication:
**15.06.2011 Bulletin 2011/24**

(21) Application number: **09812859.8**

(22) Date of filing: **04.09.2009**

(51) Int Cl.:
*F24F 11/02* (2006.01)       *F24F 1/00* (2011.01)
*F24F 6/00* (2006.01)

(86) International application number:
**PCT/JP2009/004374**

(87) International publication number:
**WO 2010/029710 (18.03.2010 Gazette 2010/11)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority: **09.09.2008 JP 2008231145**

(71) Applicant: **Daikin Industries, Ltd.**
**Osaka 530-8323 (JP)**

(72) Inventor: **MATSUBARA, Atsushi**
**Kusatsu-shi**
**Shiga 525-8526 (JP)**

(74) Representative: **HOFFMANN EITLE**
**Patent- und Rechtsanwälte**
**Arabellastraße 4**
**81925 München (DE)**

(54) **AIR CONDITIONER**

(57)     An air conditioner (1) is equipped with an indoor heat exchanger (11), a humidifying unit (50), and a control unit (60). The indoor heat exchanger (11) performs heat exchange with air in a room. The humidifying unit (50) can supply humid air whose water content is higher than that of the air in the room to the room. The control unit (60) performs a deodorizing operation including a water filter phase in which a dehumidifying action and an air supplying action are concurrently executed. The dehumidifying action is an action where the air in the room is dehumidified in at least a second indoor heat exchanger (11b) of the indoor heat exchanger (11). Further, the air supplying action is an action where the humid air is supplied to the room by the humidifying unit (50).

FIG. 5

Printed by Jouve, 75001 PARIS (FR)

EP 2 333 444 A1

## Description

### TECHNICAL FIELD

The present invention relates to an air conditioner equipped with a humidifying function and a dehumidifying function.

### BACKGROUND ART

Conventionally, there have been proposed methods of recovering, together with condensed water, odorous components and so forth included in air by condensing air whose relative humidity has been raised by humidification or the like.

For example, the air purifier disclosed in patent literature 1 (JP-ANo. 2005-106358) is equipped with a humidifying unit, which humidifies air that it has taken in from a room, and a dehumidifying unit, which dehumidifies the air that has been humidified in the humidifying unit. In this air purifier, contaminated air that the air purifier has taken in from the room has its humidity raised in the humidifying unit, whereby high-humidity air is generated, and the generated high-humidity air is dehumidified in the dehumidifying unit. At this time, the air purifier purifies the air after dehumidification by taking airborne contaminants into condensed water that has been condensed by dehumidification. In this way, this air purifier has an air purifying function of taking in and purifying the air in the room and returning the purified air to the room.

Further, the volatile organic compound removing apparatus disclosed in patent literature 2 (JP-A No. 2005-125085) is equipped with a humidifying and dehumidifying device having a humidifying function and a dehumidifying function. In this removing apparatus, after the end of a first step of humidifying a room, a second step of dehumidifying the air in the humidified room is performed. This removing apparatus causes volatile organic compounds adhering to building materials and so forth to be released into the air by humidifying the room in the first step and condenses, together with the air, the released volatile organic compounds and recovers condensed water including the volatile organic compounds in the second step. Thus, the removing apparatus performs removal of volatile organic compounds in the room.

### SUMMARY OF THE INVENTION

<Technical Problem>

However, in the air purifier disclosed in patent literature 1, there is the fear that it cannot sufficiently remove the odorous components adhering to fabric and building materials in the room because it humidifies the air that has been taken in from the room.

Further, in the volatile organic compound removing apparatus disclosed in patent literature 2, there is the fear that, in a case where it has moved to the second step without being able to sufficiently release into the air the odorous components permeating fabric and building materials in the room in the first step in which the room is humidified, the removal of odorous components in the room is not sufficiently performed in the second step. For this reason, there is the fear that deodorization of the room is not sufficiently performed even in a case where the air purifying function or the removing apparatus described above is installed in an air conditioner.

Therefore, it is a problem of the present invention to provide an air conditioner that can improve the efficiency with which a room is deodorized.

<Solution to the Problem>

An air conditioner pertaining to a first aspect of the invention comprises an indoor heat exchanger, air supplying means, and a control unit. The indoor heat exchanger performs heat exchange with air in a room. The air supplying means can supply humid air whose water content is higher than that of the air in the room to the room. The control unit performs a deodorizing operation including a concurrent dehumidification and humidification execution phase in which a dehumidifying action and an air supplying action are concurrently executed. The dehumidifying action is an action where the air in the room is dehumidified in the indoor heat exchanger. Further, the air supplying action is an action where the humid air is supplied to the room by the air supplying means.

In the air conditioner pertaining to the first aspect of the invention, the dehumidifying action and the air supplying action are concurrently executed in the concurrent dehumidification and humidification execution phase included in the deodorizing operation. For this reason, odorous components adhering to fabric and building materials in the room can be removed compared to a case where only the dehumidifying action is executed in the deodorizing operation, for example.

Thus, the efficiency with which the room is deodorized can be improved.

An air conditioner pertaining to a second aspect of the invention is the air conditioner of the first aspect of the invention, wherein the air supplying means has a humidifying section that can humidify air supplied to the room. For this reason, in this air conditioner, the humid air can be humidified and supplied to the room.

Thus, the deodorizing effect of causing odorous components permeating fabric and building materials in the room to be released into the air can be improved.

An air conditioner pertaining to a third aspect of the invention is the air conditioner of the second aspect of the invention, wherein the control unit controls the air supplying means to thereby switch between a first state and a second state. In the first state, the humid air including humidified air generated by the humidifying section is supplied to the room. Further, in the second state, the humid air including outdoor air is supplied to the room.

In the air conditioner pertaining to the third aspect of the invention, the first state and the second state are switched between in the air supplying action of the deodorizing operation. For this reason, in a case where, for example, in the first state the outdoor air including the humidified air generated by driving the humidifying section is supplied and in the second state the outdoor air is supplied to the room without the humidifying section being driven, energy saving can be realized in the air supplying means compared to a case where the humidifying section is always driven.

An air conditioner pertaining to a fourth aspect of the invention is the air conditioner of the third aspect of the invention, further comprising a temperature detecting component that detects the temperature of the outdoor air. Further, the control unit switches between the first state and the second state on the basis of the detection result of the temperature detecting component. For this reason, for example, in a hot and humid climate where it is expected that the absolute humidity of the outdoor air will be high in a case where the temperature of the outdoor air is high, in a case where the state is switched to the first state in a case where it has been judged by the control unit that the outdoor temperature is low, and where the state is switched to the second state in a case where it has been judged by the control unit that the outdoor temperature is high, high-humidity air from the outdoors can be supplied to the room even in the air supplying action of the second state.

Thus, high-humidity air can be supplied to the room.

An air conditioner pertaining to a fifth aspect of the invention is the air conditioner of the third aspect of the invention, further comprising a humidity detecting component that detects the humidity of the outdoor air. Further, the control unit switches between the first state and the second state on the basis of the detection result of the humidity detecting component. For this reason, for example, in a case where the state is switched to the first state in a case where it has been judged by the control unit that the outdoor humidity is low, and where the state is switched to the second state in a case where it has been judged by the control unit that the outdoor humidity is high, high-humidity air is supplied to the room even in the air supplying action of the second state.

Thus, high-humidity air can be supplied to the room.

An air conditioner pertaining to a sixth aspect of the invention is the air conditioner of any of the first to fifth aspects of the invention, wherein in the deodorizing operation, the control unit switches phases in the order of a high-humidity phase including the air supplying action, the concurrent dehumidification and humidification execution phase, and a humidity adjustment phase including the dehumidifying action. For this reason, in the high-humidity phase, by supplying the humid air to the room, it can be made easier to cause odorous components permeating fabric and building materials in the room to be released into the air. Further, in the concurrent dehumidification and humidification execution phase, by concurrently performing the dehumidifying action and the air supplying action, it can be made even easier to cause odorous components permeating fabric and building materials in the room to be released by supplying the humid air to the room by the air supplying action while recovering the odorous components being released into the air by the dehumidifying operation. Moreover, in the humidity adjustment phase, by dehumidifying by the dehumidifying action the room to which the humid air has been supplied in the concurrent dehumidification and humidification execution phase, the comfort of the room environment after the end of the deodorizing operation can be improved compared to a case where the humidity adjustment phase is not included in the deodorizing operation.

Thus, a deodorizing operation whose deodorizing efficiency is good can be performed.

An air conditioner pertaining to a seventh aspect of the invention is the air conditioner of the sixth aspect of the invention, wherein in the high-humidity phase, the control unit performs control such that the temperature in the room becomes equal to or greater than a predetermined temperature and performs control such that the humidity in the room becomes equal to or greater than a predetermined humidity. For this reason, in this air conditioner, it can be made difficult for the humidity and the temperature in the room to fall to a temperature and a humidity at which the deodorizing effect is not obtained.

Thus, the fear that the deodorizing effect will decrease can be reduced.

An air conditioner pertaining to an eighth aspect of the invention is the air conditioner of any of the first to seventh aspects of the invention, wherein the indoor heat exchanger has a first indoor heat exchange component and a second indoor heat exchange component. Further, in the concurrent dehumidification and humidification execution phase, the control unit causes the first indoor heat exchange component to function as a heat radiator or a heat absorber and causes the second indoor heat exchange component to function as a heat absorber on the basis of the temperature in the room. For this reason, in this air conditioner, in wintertime and so forth when the temperature in the room is low, the first indoor heat exchange component and the second indoor heat exchange component both function as heat absorbers, whereby the fear that the room temperature will fall to a temperature at which the deodorizing effect is not obtained can be reduced.

Thus, the deodorizing effect can be maintained.

An air conditioner pertaining to a ninth aspect of the invention is the air conditioner of any of the first to eighth aspects of the invention, wherein the air supplying means has an air supplying fan for supplying the outdoor air to the room. Further, the control unit has an air volume adjusting unit that adjusts the air volume of the air supplying fan. Moreover, the control unit performs control of the volume of the humid air supplied to the room by using the air volume adjusting unit to adjust the air volume of the air supplying fan in the deodorizing operation. For this reason, the volume of the humid air supplied to the room can be increased by increasing the air volume of the air supplying fan at the time of the deodorizing operation, for example.

Thus, the deodorizing effect can be improved.

<Advantageous Effects of the Invention>

In the air conditioner pertaining to the first aspect of the invention, the efficiency with which the room is deodorized can be improved.

In the air conditioner pertaining to the second aspect of the invention, the deodorizing effect can be improved.

In the air conditioner pertaining to the third aspect of the invention, energy saving can be realized in the air supplying means.

In the air conditioner pertaining to the fourth aspect of the invention, high-humidity air can be supplied to the room.

In the air conditioner pertaining to the fifth aspect of the invention, high-humidity air can be supplied to the room.

In the air conditioner pertaining to the sixth aspect of the invention, a deodorizing operation whose deodorizing efficiency is good can be performed.

In the air conditioner pertaining to the seventh aspect of the invention, the fear that the deodorizing effect will decrease can be reduced.

In the air conditioner pertaining to the eighth aspect of the invention, the deodorizing effect can be maintained.

In the air conditioner pertaining to the ninth aspect of the invention, the deodorizing effect can be improved.

**BRIEF DESCRIPTION OF THE DRAWING**

FIG 1 is a front view of an air conditioner pertaining to an embodiment of the present invention.

FIG. 2 is a general refrigerant circuit diagram of the air conditioner pertaining to the embodiment of the present invention.

FIG. 3 is an exploded perspective view of an outdoor unit.

FIG. 4 is a control block diagram of a control unit with which the air conditioner pertaining to the embodiment of the present invention is equipped.

FIG. 5 is a diagram showing one example of a control action in a deodorizing operation.

FIG. 6 is a diagram showing a dehumidifying action and an air supplying action in a steam-out phase.

FIG. 7 is a diagram showing the dehumidifying action and the air supplying action in a water filter phase of modification (A).

FIG. 8 is a control block diagram of a control unit with which an air conditioner pertaining to modification (B) is equipped.

FIG. 9 is a diagram showing electrical resistance values of a dew condensation sensor pertaining to modification (B), a dew condensation state, and a non-dew condensation state.

**DESCRIPTION OF THE EMBODIMENTS**

<Configuration of Air Conditioner>

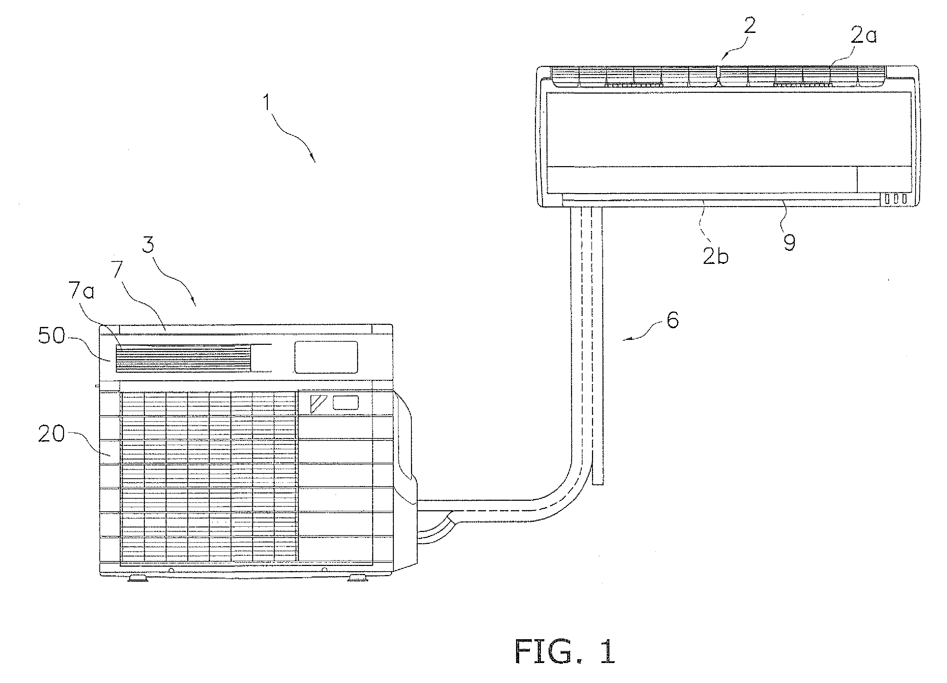

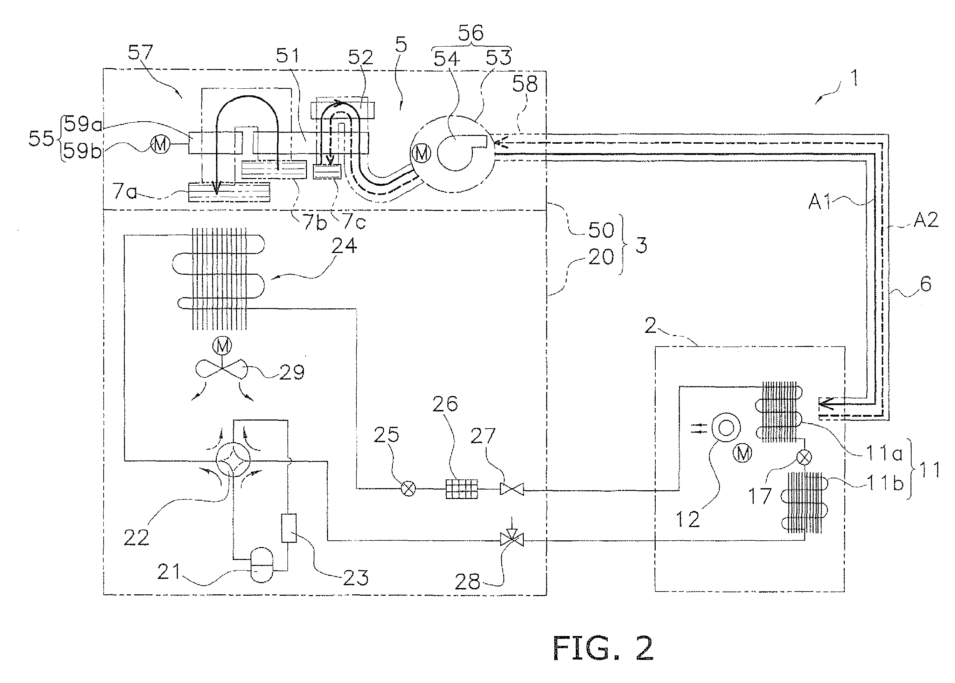

As shown in FIG. 1 and FIG. 2, an air conditioner 1 pertaining to one embodiment of the present invention is equipped with an outdoor unit 3 and an indoor unit 2. Further, this air conditioner 1 can perform normal operations, such as a cooling operation, a heating operation, a humidifying operation, an air supplying operation, and an air discharging operation, as well as a deodorizing operation that deodorizes a room. The deodorizing operation here is an operation that can cause odorous components and so forth permeating fabric and building materials in the room to be released into the room air and discharge the odorous components released into the air to the outdoors. Further, the outdoor unit 3 is equipped with an outdoor air conditioning unit 20, which internally houses an outdoor heat exchanger 24 and an outdoor fan 29, and a humidifying unit 50. An indoor heat exchanger 11 is housed inside the indoor unit 2. Further, an air suction and discharge hose 6 that can communicatively connect the inside space of the humidifying unit 50 and the inside space of the indoor unit 2 is disposed between the humidifying unit 50 and the indoor unit 2. One end of the air suction and discharge hose 6 is connected to a later-described air suction and discharge duct 58 of the humidifying unit 50, and the other end of the air suction and discharge hose 6 extends inside the indoor unit 2.

<Configuration of Indoor Unit>

The indoor unit 2 is a wall-mounted indoor unit installed on a wall surface or the like in the room. Further, as shown in FIG. 2, the indoor unit 2 is connected to the outdoor unit 3 via refrigerant pipes. Moreover, as shown in FIG 2, an indoor fan 12 and the aforementioned indoor heat exchanger 11 and so forth are housed in the indoor unit 2.

The indoor heat exchanger 11 comprises a heat transfer tube that is bent multiple times at both lengthwise direction ends and multiple fins that are inserted from the heat transfer tube, and the indoor heat exchanger 11 performs heat exchange with air coming into contact with it. Further, the indoor heat exchanger 11 is configured from a first indoor heat exchanger 11a and a second indoor heat exchanger 11b, and an indoor expansion valve 17 is disposed between the first indoor heat exchanger 11a and the second indoor heat exchanger 11b.

The indoor fan 12 is a cross-flow fan configured in the shape of a circular cylinder, with blades being disposed in its axis-of rotation direction on its peripheral surface. The indoor fan 12 generates an airflow in a direction crossing its axis of rotation as a result of being driven to rotate. The indoor fan 12 causes the air in the room to be sucked into the indoor unit 2 and causes the air after heat exchange has been performed with the indoor heat exchanger 11 to be blown out into the room.

Further, an opening is disposed in the end portion of the air suction and discharge hose 6, and the air suction and discharge hose 6 extends inside the indoor unit 2 as mentioned above. Further, the opening in the air suction and discharge hose 6 is placed in a position opposing the surfaces of the first indoor heat exchanger 11a and the second indoor heat exchanger 11b-that is, a position on the downstream side of an air intake port 2a disposed in the upper portion of the indoor unit 2 and on the upstream side of the first indoor heat exchanger 11a and the second indoor heat exchanger 11b in a state in which the indoor fan 12 is rotating and the airflow is being generated. For this reason, outdoor air that has traveled through the air suction and discharge hose 6 is blown out onto part of the surfaces of the first indoor heat exchanger 11 a and the second indoor heat exchanger 11b, travels through the first indoor heat exchanger 11 a and the second indoor heat exchanger 11b, and undergoes heat exchange. In the present embodiment, the outdoor air that has traveled through the air suction and discharge hose 6 is blown out onto part of the surfaces of the first indoor heat exchanger 11a and the second indoor heat exchanger 11b, but the embodiment is not limited to this, and the outdoor air that has traveled through the air suction and discharge hose 6 may also be blown out onto the entire surfaces of the first indoor heat exchanger 11 a and the second indoor heat exchanger 11b.

Further, a horizontal flap 9 is disposed in the neighborhood of a room air blowout port 2b formed in the indoor unit 2. The horizontal flap 9 is a plate-like member having a long shape in the lengthwise direction of the indoor unit 2 and guides the air blown out from the room air blowout port 2b. The horizontal flap 9 has an axis of rotation parallel to the lengthwise direction of the indoor unit 2 and changes the direction in which it guides the air by rotating about the axis of rotation. Thus, the air that has been taken into the indoor unit 2 from the room or the outdoor air that has been supplied to the indoor unit 2 via the air suction and discharge hose 6 is conditioned by heat exchange and is blown out into the room through the room air blowout port 2b.

<Configuration of Outdoor Unit>

As shown in FIG. 1 and FIG. 2, the outdoor unit 3 is configured from the outdoor air conditioning unit 20 in the lower portion and the humidifying unit 50 in the upper portion. For this reason, in this outdoor unit 3, the power sources of the outdoor air conditioning unit 20 and the humidifying unit 50 can be unified.

As shown in FIG. 2, a compressor 21, a four-way switching valve 22 that is connected to the discharge side of the compressor 21, an accumulator 23 that is connected to the suction side of the compressor 21, the outdoor heat exchanger 24 that is connected to the four-way switching valve 22, and an outdoor expansion valve 25 that is connected to the outdoor heat exchanger 24 are housed in the outdoor air conditioning unit 20. The outdoor expansion valve 25 is connected to a liquid refrigerant pipe via a filter 26 and a liquid stop valve 27 and is connected to one end of the first indoor heat exchanger 11a via this liquid refrigerant pipe. Further, the four-way switching valve 22 is connected to a gas refrigerant pipe via a gas stop valve 28 and is connected to one end of the second indoor heat exchanger 11b via this gas refrigerant pipe.

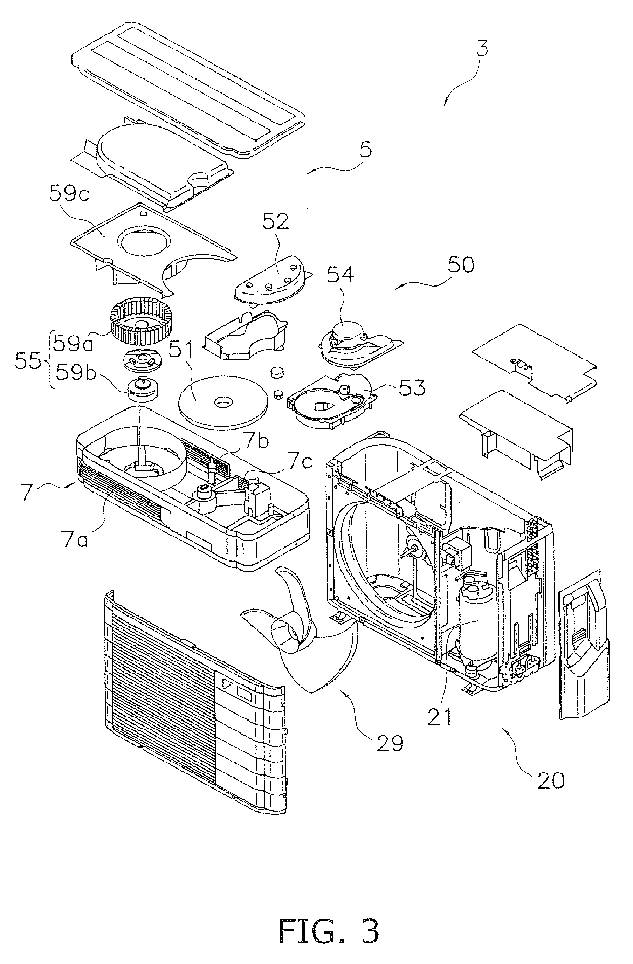

Further, as shown in FIG. 2 and FIG. 3, the humidifying unit 50 is placed in the upper portion of the outdoor unit 3 and is equipped with a humidifying unit casing 7 and a humidifying unit body 5. The humidifying unit 50 can discharge the air that has been taken in from the room to the outdoors and supply the outdoor air that has been taken in from the outdoors to the room. Further, the humidifying unit 50 can also humidify the outdoor air and supply it to the room.

As shown in FIG. 3, the humidifying unit casing 7 houses a humidifying rotor 51, a heating device 52, an air suction and discharge fan 54, an air suction and discharge switching damper 53, and an adsorption-use blowing device 55 and so forth.

As shown in FIG. 1, FIG. 2, and FIG. 3, an adsorption-use air blowout port 7a comprising multiple slit-like openings is disposed in the front surface of the humidifying unit casing 7. Further, an adsorption-use air intake port 7b and an air suction and discharge port 7c are disposed in the rear surface of the humidifying unit casing 7. The adsorption-use air intake port 7b is an opening through which air taken in from the outdoors travels to allow the humidifying rotor 51 to adsorb water. The air suction and discharge port 7c is an opening through which air taken into the humidifying unit 50 from the outdoors and sent to the indoor unit 2 travels at the time of the humidifying operation or at the time of the deodorizing operation. Further, the air suction and discharge port 7c is an opening through which air taken in from the indoor unit 2 and discharged from the humidifying unit 50 to the outdoors travels at the time of the air discharging operation.

As shown in FIG. 2, the humidifying unit body 5 is equipped with an air suction and discharge section 56, which can supply the outdoor air to the room and discharge the room air to the outdoors, and a humidifying section 57, which can humidify the air sent to the room. The air suction and discharge section 56 mainly has the air suction and discharge switching damper 53 and the air suction and discharge fan 54. Further, the humidifying section 57 mainly has the humidifying rotor 51, the heating device 52, and the adsorption-use blowing device 55.

Below, the air suction and discharge fan 54, the air suction and discharge switching damper 53, the humidifying rotor 51, the heating device 52, and the adsorption-use blowing device 55 will be described in this order.

The air suction and discharge fan 54 is placed to the side of the humidifying rotor 51 and is a radial fan assembly that generates a flow of air taken in from the outdoors and sent to the indoor unit 2. The air suction and discharge fan 54 generates a flow of air leading from the air suction and discharge port 7c via the humidifying rotor 51 and the air suction and discharge switching damper 53 to the room and sends the air it has taken in from the outdoors to the indoor unit 2. Further, the air suction and discharge fan 54 can also discharge the air in the room it has taken in from the indoor unit 2 to the outdoors. The air suction and discharge fan 54 switches between these actions as a result of the later-described air suction and discharge switching damper 53 switching. Further, as shown in FIG. 2, in a case where the air suction and discharge fan 54 sends the air it has taken in from the outdoors to the indoor unit 2, it delivers the air that has passed through the portion of the humidifying rotor 51 opposing the heating device 52 to the air suction and discharge duct 58 via the air suction and discharge switching damper 53. The air suction and discharge duct 58 is connected to the air suction and discharge hose 6, so the air suction and discharge fan 54 supplies outdoor air to the indoor unit 2 via the air suction and discharge duct 58 and the air suction and discharge hose 6. The air traveling through the air suction and discharge hose 6 and sent to the indoor unit 2 is, as mentioned above, blown out onto the surface of the indoor heat exchanger 11 inside the indoor unit 2. Further, in a case where the air suction and discharge fan 54 discharges the air in the room it has taken in from the indoor unit 2 to the outdoors, it discharges the air in the room that has traveled through the air suction and discharge hose 6 and the air suction and discharge duct 58 to the outdoors from the air suction and discharge port 7c.

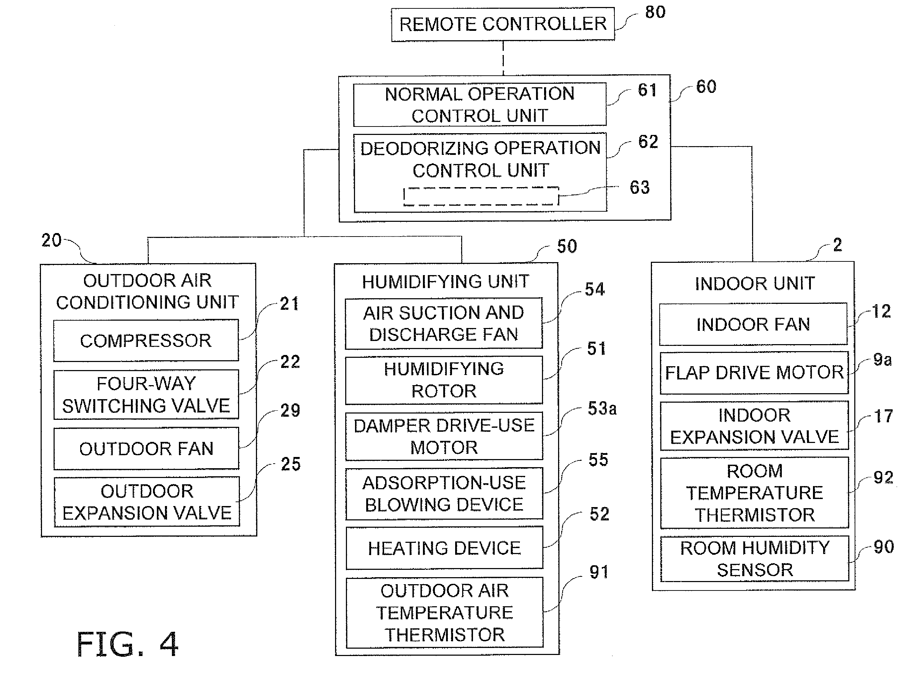

The air suction and discharge switching damper 53 is a rotary airflow path switching mechanism that includes an air suction and discharge damper and an air suction and discharge damper drive-use motor 53a (see FIG. 4) for causing the air suction and discharge damper to rotate. Further, the air suction and discharge switching damper 53 is placed below the air suction and discharge fan 54. Moreover, the air suction and discharge switching damper 53 is switched between an air supplying state and an air discharging state as a result of the air suction and discharge damper drive-use motor 53a causing the air suction and discharge damper to rotate.

In the air supplying state, an airflow leading from the humidifying unit 50 side toward the indoor unit 2 side is generated by the air suction and discharge fan 54 rotating. For example, in a case where the air suction and discharge switching damper 53 is in the air supplying state, the air that has been blown out from the air suction and discharge fan 54 travels via the air suction and discharge duct 58 through the air suction and discharge hose 6 and is supplied to the indoor unit 2. Thus, in the air supplying state, the air flows in the direction of A1 shown in FIG. 2, so that the outdoor air travels through the air suction and discharge hose 6 and is supplied to the indoor unit 2.

In the air discharging state, an airflow leading from the indoor unit 2 side toward the humidifying unit 50 side is generated by the air suction and discharge fan 54 rotating. For example, in a case where the air suction and discharge switching damper 53 is in the air discharging state, the air in the room that has been taken in from the indoor unit 2 travels via the air suction and discharge hose 6 through the air suction and discharge duct 58 and is discharged to the outdoors. Thus, in the air discharging state, the air flows in the direction of A2 shown in FIG. 2, so that the air that has traveled from the indoor unit 2 through the air suction and discharge hose 6 and the air suction and discharge duct 58 and is discharged to the outdoors via the air suction and discharge port 7c.

The humidifying rotor 51 is a ceramic rotor with a honeycomb structure and has a generally disc-shaped outer shape. Further, the humidifying rotor 51 is rotatably disposed and is driven to rotate by a rotor drive-use motor. Moreover, the main portion of the humidifying rotor 51 is fired from an adsorbent such as zeolite. The adsorbent such as zeolite has the property of adsorbing water in the air coming into contact therewith and desorbing the adsorbed water as a result of being heated. In the present embodiment, zeolite is used as the adsorbent, but it is also possible to use silica gel or alumina as the adsorbent.

The heating device 52 is positioned above the humidifying rotor 51 and is placed opposing the humidifying rotor 51. Further, the heating device 52 can heat the humidifying rotor 51 by heating the air sent to the humidifying rotor 51.

The adsorption-use blowing device 55 has an adsorption-use fan motor 59b and an adsorption fan 59a that is driven to rotate by the adsorption-use fan motor 59b, and the adsorption-use blowing device 55 generates a flow of air that passes through the portion of the humidifying rotor 51 not opposing the heating device 52. That is, the adsorption-use blowing device 55 generates a flow of air that is sucked in from the adsorption-use air intake port 7b, passes through the portion of the humidifying rotor 51 not opposing the heating device 52, travels through an opening in a bellmouth 59c, and is discharged to the outdoors from the adsorption-use air blowout port 7a.

Because of this configuration, in the humidifying section 57, the outdoor air that has been taken into the humidifying unit casing 7 as a result of the adsorption fan 59a being driven to rotate is discharged to the outside of the humidifying unit casing 7 via the humidifying rotor 51 and the adsorption fan 59a. At this time, when the air that has been taken in from the outdoors passes through substantially half of the humidifying rotor 51 on the left side, the water included in the air is adsorbed by the humidifying rotor 51. Then, when the humidifying rotor 51 is heated by the heating device 52, the water that had been adsorbed in the humidifying rotor 51 desorbs into the airflow generated by the air suction and discharge fan 54, whereby humidified air is generated.

For this reason, in the humidifying unit 50, as described above, in a case where the air suction and discharge switching damper 53 is in the air supplying state, the air that has been blown out from the air suction and discharge fan 54 travels via the air suction and discharge duct 58 through the air suction and discharge hose 6 and is supplied to the indoor unit 2. At this time, in a case where the humidifying rotor 51 and the adsorption fan 59a of the humidifying section 57 are being driven to rotate and the humidifying rotor 51 is being heated by the heating device 52, the outdoor air including the humidified air generated in the humidifying section 57 travels through the air suction and discharge hose 6 and is supplied to the indoor unit 2. For this reason, when the air suction and discharge switching damper 53 is in the air supplying state, the air flows in the direction of A1 shown in FIG. 1, and the outdoor air is humidified or is not humidified, travels through the air suction and discharge hose 6, and is supplied to the indoor unit 2.

Further, the air conditioner 1 is equipped with a control unit 60 that controls the various devices included in the air conditioner 1 such that the various operations such as the cooling operation, the heating operation, a dehumidifying operation, the humidifying operation, the air discharging operation, and the deodorizing operation are performed. Below, the control unit 60 will be described.

<Control Unit>

As shown in FIG. 4, the control unit 60 is connected to the various devices of the indoor unit 2, the outdoor air conditioning unit 20, and the humidifying unit 50, and the control unit 60 performs action control of the various devices in accordance with each operating mode such as the cooling operation, the heating operation, the dehumidifying operation, the humidifying operation, the air discharging operation, and the deodorizing operation on the basis of commands from the user via a remote controller 80 or the like.

Further, the control unit 60 is equipped with a normal operation control unit 61 and a deodorizing operation control unit 62. The normal operation control unit 61 performs operation control of the operations such that the normal operations including the cooling operation, the heating operation, the dehumidifying operation, the humidifying operation, and the air discharging operation are performed in the air conditioner 1 by performing action control of the various devices. For example, in a case where a command to start the humidifying operation has been given via the remote controller 80 by the user, the normal operation control unit 61 performs action control of the various devices such as the compressor 21 such that the humidifying operation is performed in the air conditioner 1. Further, an air supplying action is included in the control action of the various devices at the time of the humidifying operation.

The air supplying action in the present embodiment is a control action where the various devices included in the humidifying unit 50 are controlled by the normal operation control unit 61 or the deodorizing operation control unit 62 such that the outdoor air is humidified or is not humidified, travels through the air suction and discharge hose 6, and is supplied to the indoor unit 2. Further, included in the air supplying action are a humidified air supplying action, which is an air Supplying action where the outdoor air is sent to the indoor unit 2 by the air suction and discharge fan 54 in a humidifying state (which corresponds to a first state) in which humidified air is actively generated as a result of the humidifying section 57 being driven by the normal operation control unit 61 or the deodorizing operation control unit 62, and a ventilation air supplying action, where the outdoor air is sent to the indoor unit 2 by the air suction and discharge fan 54 in a ventilating state (which corresponds to a second state) in which the active generation of humidified air is not performed because the humidifying section 57 is not driven by the normal operation control unit 61 or the deodorizing operation control unit 62.

For this reason, in a case where the humidity in the room has reached a set humidity during execution of the humidifying operation where the humidified air supplying action is being performed, the normal operation control unit 61 switches from the humidified air supplying action to the ventilation air supplying action such that the humidity in the room becomes equal to the set humidity. Specifically, in a case where the humidity in the room has reached the set humidity during execution of the humidifying operation where the humidified air supplying action is being performed, the normal operation control unit 61 adjusts the volume of the humidified air supplied to the indoor unit 2 by stopping the active generation of humidified air in the humidifying section 57 by performing control that stops the rotation of the humidifying rotor 51 and the adsorption fan 59a of the humidifying section 57 and stops the heating of the humidifying rotor 51 in the heating device 52. In this way, the humidifying operation is performed in the air conditioner 1.

In the present embodiment, in a case where the humidity in the room has reached the set humidity during execution of the humidifying operation, the normal operation control unit 61 controls the volume of the humidified air supplied to the room by performing control that stops the rotation of the humidifying rotor 51 and the adsorption fan 59a of the humidifying section 57 and stops the heating of the humidifying rotor 51 in the heating device 52, but the means for controlling the volume of the humidified air supplied to the room is not limited to this; for example, control that stops the rotation of the humidifying rotor and the adsorption fan of the humidifying section, stops the heating of the humidifying rotor in the heating device, and by which rotation of the air suction and discharge fan is stopped may also be performed by the normal operation control unit. Further, as the means for controlling the volume of the humidified air supplied to the room, control that lowers the temperature of the heating device may also be performed without control that stops the rotation of the humidifying rotor and the adsorption fan 59a being performed by the normal operation control unit. Further, in the present embodiment, even other than a case where the humidity in the room has reached the set humidity during execution of the humidifying operation, the volume of the humidified air supplied to the indoor unit 2 is controlled as a result of the humidifying section 57 being controlled on the basis of the temperature of the indoor heat exchanger 11.

Further, in a case where a command to start the dehumidifying operation has been given via the remote controller 80 by the user, the normal operation control unit 61 performs action control of the various devices such as the compressor 21 such that the dehumidifying operation is performed in the air conditioner 1. Further, included in the action control of the various devices in the dehumidifying operation is a dehumidifying action. The dehumidifying action in the dehumidifying operation is an action where the various devices are controlled by the normal operation control unit 61 such that the indoor heat exchanger 11 functions as a heat absorber. Included in the dehumidifying action in the dehumidifying operation is a normal dehumidifying action, where the various devices are controlled by the normal operation control unit 61 such that the first indoor heat exchanger 11a and the second indoor heat exchanger 11b function as heat absorbers, and a reheat dehumidifying action, where the various devices are controlled such that the first indoor heat exchanger 11a functions as a heat radiator and the second indoor heat exchanger 11b functions as a heat absorber. The reheat dehumidifying action and the normal dehumidifying action will be described later. Moreover, in a case where the room temperature has fallen below a set temperature while the dehumidifying operation is being executed in the air conditioner 1, the various devices are controlled by the normal operation control unit 61, whereby thermo-off is performed or the operation switches from the dehumidifying operation to the heating operation. In the present embodiment, a cooling action is not included as the dehumidifying action in the dehumidifying operation, but the embodiment is not limited to this, and a cooling action may also be included as the dehumidifying action in the dehumidifying operation.

Further, the deodorizing operation control unit 62 performs action control of the various devices such that the deodorizing operation is performed in the air conditioner 1. Further, the deodorizing operation control unit 62 has an air volume adjusting unit 63 that controls the speed of the air suction and discharge fan 54. The air volume adjusting unit 63 adjusts the supply volume of the outdoor air blown out into the room in the deodorizing operation by controlling the speed of the air suction and discharge fan 54.

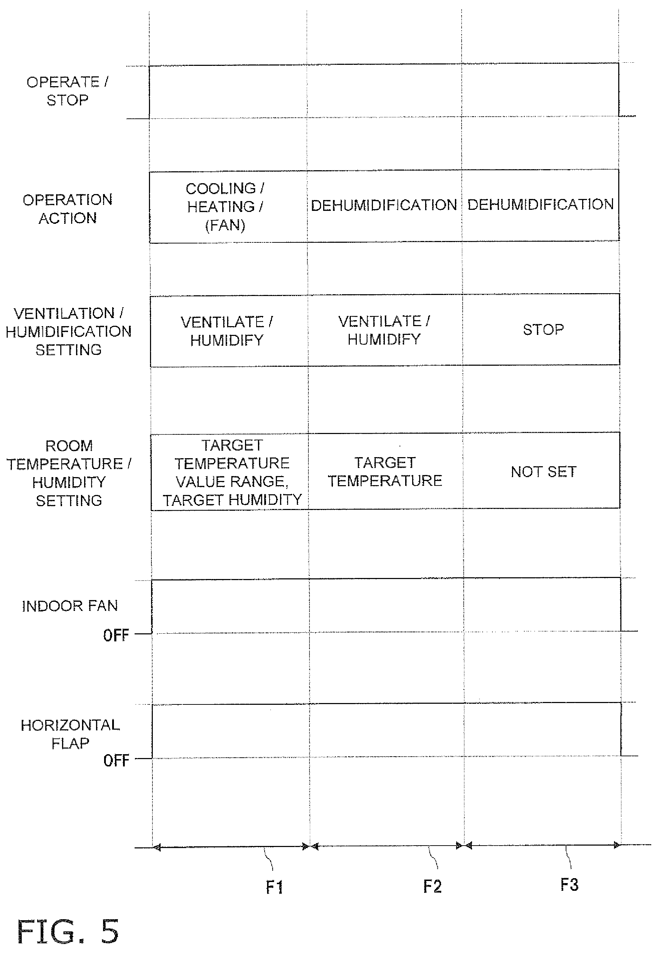

Further, as shown in FIG. 5, in the deodorizing operation, the deodorizing operation control unit 62 switches phases in the order of a steam-out phase F1, a water filter phase F2, and a humidity adjustment phase F3.

In the steam-out phase F1, the deodorizing operation control unit 62 performs action control of a flap drive motor 9a such that the angle of inclination of the horizontal flap 9 becomes a predetermined angle. Further, the deodorizing operation control unit 62 controls the rotation of the indoor fan 12 such that the indoor fan 12 reaches a predetermined air volume. The predetermined air volume of the indoor fan 12 here is an air volume equal to a set air volume at the time of the normal operations, for example. Moreover, the air volume adjusting unit 63 controls the rotation of the air suction and discharge fan 54 such that the air suction and discharge fan 54 reaches a predetermined air volume. The predetermined air volume of the air suction and discharge fan 54 here is the largest air volume of the air volumes generated by the air suction and discharge fan 54 at the time of the humidifying operation.

Further, in the steam-out phase F1, the deodorizing operation control unit 62 performs the air supplying action such that a room humidity value detected by a room humidity sensor 90 becomes equal to or greater than a target humidity (e.g., 60%) value. Further, the deodorizing operation control unit 62 controls the various devices of the humidifying unit 50 such that the humidifying state and the ventilating state in the air supplying action switch on the basis of an outdoor air temperature value detected by an outdoor air temperature thermistor 91. Specifically, in the steam-out phase F1, in a case where the deodorizing operation control unit 62 has judged that the outdoor air temperature value that has been detected in the outdoor air temperature thermi stor 91 is equal to or greater than a predetermined first temperature (e.g., 30°C) value, the deodorizing operation control unit 62 performs control that stops the driving of the humidifying section 57 such that humidified air is not actively generated in the humidifying section 57 of the humidifying unit 50. For this reason, in the steam-out phase F1, in a case where the outdoor air temperature value is equal to or greater than the predetermined temperature value, the active generation of humidified air from the outdoor air where the humidifying rotor 51 of the humidifying section 57 is heated by the heating device 52 is not performed, and the air supplying action in the ventilating state in which the outdoor air that has been taken in from the air suction and discharge port 7c travels via the humidifying rotor 51 and the air suction and discharge switching damper 53 through the air suction and discharge hose 6 and is supplied to the indoor unit 2-that is, the ventilation air supplying action-is performed.

Further, in the steam-out phase F1, in a case where the deodorizing operation control unit 62 has judged that the outdoor air temperature value that has been detected in the outdoor air temperature thermistor 91 is less than the first predetermined temperature (e.g., 30°C) value, the deodorizing operation control unit 62 performs control the drives that humidifying section 57 such that humidified air is actively generated in the humidifying section 57 of the humidifying unit 50. For this reason, in the steam-out phase F1, in a case where the outdoor air temperature value is less than the predetermined temperature value, the air supplying action in the humidifying state in which the outdoor air including humidified air generated in the humidifying section 57 as a result of the humidifying rotor 51 and the adsorption fan 59a of the humidifying section 57 being driven to rotate and the humidifying rotor 51 being heated by the heating device 52 travels through the air suction and discharge hose 6 and is supplied to the indoor unit 6-that is, the humidified air supplying action-is performed.

In this way, in the steam-out phase F1 of the deodorizing operation, in a case where the outdoor air temperature is equal to or greater than the predetermined temperature, the deodorizing operation control unit 62 controls the various devices of the humidifying unit 50 such that the active generation of humidified air by the humidifying section 57 is not performed, and in a case where the outdoor air temperature is less than the predetermined temperature, the deodorizing operation control unit 62 controls the various devices of the humidifying unit 50 such that the active generation of humidified air by the humidifying section 57 is performed.

The air conditioner 1 of the present embodiment assumes a hot and humid climate where, in a case where the outdoor air temperature is equal to or greater than 30°C, it is expected that there will be an absolute humidity corresponding to 60% at 30°C at a rate of occurrence of about 85%. For this reason, for example, in a case where the air conditioner 1 is applied to a climate other than a hot and humid climate, the deodorizing operation control unit performs switching between the humidifying state and the ventilating state on the basis of the room humidity value detected by the room humidity sensor, for example, and not the outdoor air temperature value. Further, in the present embodiment, in the air supplying action in the deodorizing operation, the deodorizing operation control unit 62 switches states between the humidifying state and the ventilating state on the basis of the outdoor temperature, but in order to improve the deodorizing effect, in the air supplying action of the deodorizing operation, the air supplying action in the humidifying state may also always be performed without the air supplying action in the ventilating state being performed.

Further, the judgment of the outdoor air temperature value by the deodorizing operation control unit 62 is performed every predetermined amount of time (e.g., 1 minute).

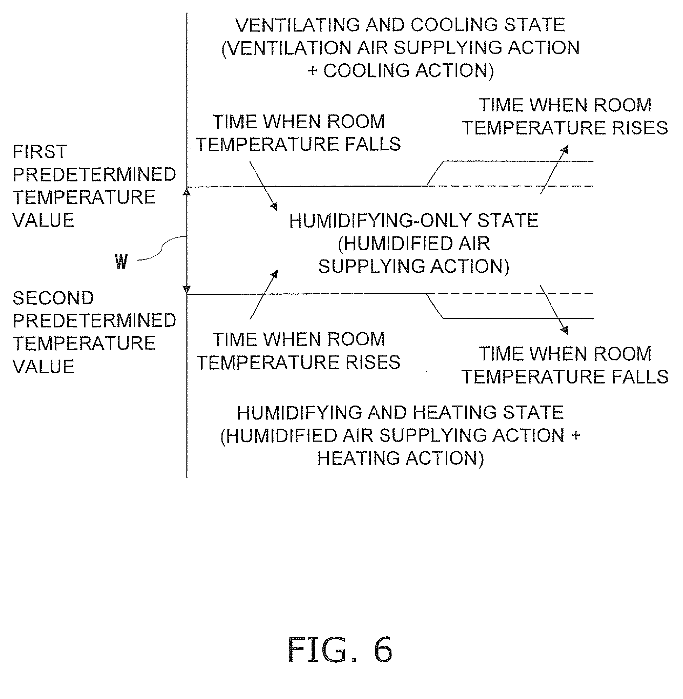

Further, in the steam-out phase F1, as shown in FIG. 6, the deodorizing operation control unit 62 causes the refrigerant to circulate in the refrigerant circuit by controlling the various devices such as the compressor 21 such that the room temperature value detected by the room temperature thermistor 92 enters a target temperature value range W. The target temperature value range W here is a range equal to or greater than a predetermined second temperature (e.g., 20°C) value and equal to or less than the predetermined first temperature (e.g., 30°C) value. The predetermined first temperature and the predetermined second temperature here are temperatures where the predetermined second temperature is lower than the predetermined first temperature.

For example, in a case where the room temperature value is less than the predetermined second temperature value of the target temperature value range W, the deodorizing operation control unit 62 judges that a heating action performed at the time of the heating operation is needed and controls the various devices such that the heating action is performed. The heating action here is one where the normal operation control unit 61 or the deodorizing operation control unit 62 switches the four-way switching valve 22 to the position of the dotted lines shown in FIG. 2, narrows the outdoor expansion valve 25, completely opens the indoor expansion valve 17, and starts the compressor 21. For this reason, when the heating action is performed, the high-pressure refrigerant discharged from the compressor 21 condenses in the indoor heat exchanger 11, thereafter has its pressure reduced in the outdoor expansion valve 25, and flows into the outdoor heat exchanger 24. Then, the refrigerant evaporates in the outdoor heat exchanger 24 and thereafter returns to the compressor 21 via the four-way switching valve 22 and the accumulator 23. At this time, the room air is warmed because the refrigerant condenses in the indoor heat exchanger 11. Further, in a case where the room temperature value is greater than the predetermined first temperature value of the target temperature value range W, the deodorizing operation control unit 62 judges that a cooling action performed at the time of the cooling operation is needed and controls the various devices such that the cooling action is performed. The cooling action here is one where the normal operation control unit 61 or the deodorizing operation control unit 62 switches the four-way switching valve 22 to the position of the solid lines shown in FIG. 2, narrows the outdoor expansion valve 25, completely opens the indoor expansion valve 17, and starts the compressor 21. For this reason, when the cooling action is performed, the high-pressure refrigerant discharged from the compressor 21 condenses in the outdoor heat exchanger 24, thereafter has its pressure reduced in the outdoor expansion valve 25, and flows into the first indoor heat exchanger 11a. Then, the refrigerant evaporates in the first indoor heat exchanger 11a, evaporates in the second indoor heat exchanger 11b via the indoor expansion valve 17, and thereafter returns to the compressor 21 via the four-way switching valve 22 and the accumulator 23. At this time, the room air is cooled because the refrigerant evaporates in the first indoor heat exchanger 11 a and the second indoor heat exchanger 11b. Moreover, in a case where the room temperature value is in the target temperature value range W, the deodorizing operation control unit 62 judges that the cooling action and the heating action are not needed, performs control that stops the driving of the various devices such as the compressor 21 and so forth in a case where the compressor 21 and so forth are being driven, and does not perform control that drives the compressor 21 and so forth in a case where the compressor 21 and so forth are not being driven. As for the action judgment by the deodorizing operation control unit 62 at the time when the deodorizing operation starts, the deodorizing operation control unit 62 judges the action at times when the room temperature rises shown in FIG. 6.

For this reason, in the steam-out phase F1 of the deodorizing operation, there are the three states of a ventilating and cooling state in which the ventilation air supplying action and the cooling action are concurrently performed, a humidifying and heating state in which the humidified air supplying action and the heating action are concurrently performed, and a humidifying-only state in which only the humidified air supplying action is performed and neither the cooling action nor the heating action is performed. Consequently, in the steam-out phase F1 of the deodorizing operation, the deodorizing operation control unit 62 switches the three states of the ventilating and cooling state, the humidifying and heating state, and the humidifying-only state on the basis of the room temperature value and the outdoor temperature value.

Further, in the water filter phase F2, the deodorizing operation control unit 62 performs action control of the flap drive motor 9a such that the angle of inclination of the horizontal flap 9 maintains the predetermined angle at the time of the steam-out phase F1. Further, the deodorizing operation control unit 62 controls the rotation of the indoor fan 12 such that the indoor fan 12 reaches the predetermined air volume at the time of the steam-out phase F1. Moreover, the air volume adjusting unit 63 controls the rotation of the air suction and discharge fan 54 such that the air suction and discharge fan 54 reaches the air volume at the time of the steam-out phase F1.

Further, the deodorizing operation control unit 62 controls the various devices such as the compressor 21 and so forth such that a dehumidifying action in the water filter phase F2 of the deodorizing operation is performed using the room temperature value detected by the room temperature thermistor 92 at the time of the end of the steam-out phase F1 as a target temperature. The speed of the compressor 21 at this time is greater than the speed at the time of the normal operations or is a maximum speed.

Further, included in the dehumidifying action in the water filter phase F2 are a normal dehumidifying action, where the various devices are controlled by the deodorizing operation control unit 62 such that the first indoor heat exchanger 11 a and the second indoor heat exchanger 11b function as heat absorbers, and a reheat dehumidifying action, where the various devices are controlled by the deodorizing operation control unit 62 such that the first indoor heat exchanger 11a functions as a heat radiator and the second indoor heat exchanger 11b functions as a heat absorber. The deodorizing operation control unit 62 performs the dehumidifying action of either the normal dehumidifying action or the reheat dehumidifying action on the basis of the room temperature value at the time of the end of the steam-out phase F1. Specifically, in a case where the target temperature is less than a predetermined third temperature (e.g., 20°C) value, the deodorizing operation control unit 62 judges that the reheat dehumidifying action is needed and performs the reheat dehumidifying action. The reheat dehumidifying action here is a control action of the various devices where the deodorizing operation control unit 62 switches the four-way switching valve 22 to the position of the solid lines shown in FIG. 2, completely opens the outdoor expansion valve 25, narrows the indoor expansion valve 17, and starts the compressor 21. For this reason, when the reheat dehumidifying action is performed, the high-pressure refrigerant discharged from the compressor 21 flows into the first indoor heat exchanger 11a a via the outdoor heat exchanger 24 and the outdoor expansion valve 25, condenses in the first indoor heat exchanger 11a, and thereafter has its pressure reduced in the indoor expansion valve 17. The low-pressure refrigerant whose pressure has been reduced evaporates in the second indoor heat exchanger 11b and returns to the compressor 21 via the four-way switching valve 22 and the accumulator 23. At this time, the room air is heated because the refrigerant condenses in the first indoor heat exchanger 11a and the room air is cooled and dehumidified because the refrigerant evaporates in the second indoor heat exchanger 11b.

Further, in a case where the target temperature is equal to or greater than the predetermined third temperature (e.g., 20°C) value, the deodorizing operation control unit 62 judges that the normal dehumidifying action is needed and performs the normal dehumidifying action. The normal dehumidifying action here is an action that is the same as the dehumidifying action performed at the time of the dehumidifying operation and is a control action of the various devices where the deodorizing operation control unit 62 switches the four-way switching valve 22 to the position of the solid lines shown in FIG. 2, narrows the outdoor expansion valve 25, completely opens the indoor expansion valve 17, and starts the compressor 21. For this reason, when the dehumidifying action of the normal dehumidifying action is performed, the high-pressure refrigerant discharged from the compressor 21 condenses in the outdoor heat exchanger 24, thereafter has its pressure reduced in the outdoor expansion valve 25, and flows into the first indoor heat exchanger 11a. Then, the refrigerant evaporates in the first indoor heat exchanger 11a, evaporates in the second indoor heat exchanger 11b via the indoor expansion valve 17, and returns to the compressor 21 via the four-way switching valve 22 and the accumulator 23. At this time, the room air is cooled and dehumidified because the refrigerant evaporates in the first indoor heat exchanger 11 a and the second indoor heat exchanger 11b.

At the time of the deodorizing operation, the setting of the outdoor air temperature range in which the reheat dehumidifying can be executed is widened to an outdoor air temperature of 0°C such that the dehumidifying operation is performed even if the outdoor air temperature is low. Further, in the water filter phase F2 of the deodorizing operation, even in a case where the room temperature has fallen below the target temperature, the various devices are controlled such that the functions as a heat absorber or a heat radiator that the indoor heat exchangers 11a and 11b are currently functioning as are continued without thermo-off being performed by the deodorizing operation control unit 62. Specifically, in a case where the dehumidifying action in the water filter phase F2 of the deodorizing operation is the normal dehumidifying action and the room temperature has fallen below the target temperature, the state in which the first indoor heat exchanger 11a and the second indoor heat exchanger 11b are both functioning as heat absorbers is maintained by the deodorizing operation control unit 62. Further, in a case where the dehumidifying action in the water filter phase F2 of the dehumidifying operation is the reheat dehumidifying operation and the room temperature has fallen below the target temperature, the state in which the first indoor heat exchanger 11a is functioning as a heat radiator is maintained and the state in which the second indoor heat exchanger 11b is functioning as a heat absorber is maintained by the deodorizing operation control unit 62. That is, in the water filter phase F2 of the deodorizing operation, the various devices are not controlled by the deodorizing operation control unit 62 such that the indoor heat exchangers 11a and 11b concurrently function as heat radiators. In other words, in the water filter phase F2 of the deodorizing operation, action switching from the dehumidifying action to the heating action is not performed by the deodorizing operation control unit 62.

Moreover, in the water filter phase F2, the deodorizing operation control unit 62 performs the air supplying action in addition to the aforementioned dehumidifying action. Further, the deodorizing operation control unit 62 controls the various devices of the humidifying unit 50 such that the humidifying state and the ventilating state in the air supplying action switch on the basis of the outdoor air temperature value detected by the outdoor air temperature thermistor 91. Specifically, in a case where the outdoor temperature value is less than a predetermined fourth temperature (e.g., 24°C) value, the deodorizing operation control unit 62 performs the air supplying action in the humidifying state in which humidified air actively generated by the humidifying section 57 is supplied to the room-that is, the humidified air supplying action. Further, in a case where the outdoor temperature value is equal to or greater than the predetermined fourth temperature (e.g., 24°C) value, the deodorizing operation control unit 62 performs the air supplying action in the ventilating state in which the outdoor air from which humidified air is not actively generated by the humidifying section 57 is supplied to the room-that is, the ventilation air supplying action.

For this reason, in the water filter phase F2 of the deodorizing operation, the dehumidifying action and the air supplying action are concurrently executed by the deodorizing operation control unit 62. For example, in the water filter phase F2, in a case where the reheat dehumidifying action and the humidified air supplying action are concurrently executed, the outdoor air including the humidified air generated by the humidifying section 57 is blown out into the indoor unit 2 from the opening in the end portion of the air suction and discharge hose 6. The outdoor air is blown out on the upstream side of the indoor heat exchanger 11 in terms of the airflow traveling through the indoor heat exchanger 11 because the opening in the end portion of the air suction and discharge hose 6 is disposed in the fore of the indoor heat exchanger 11. For this reason, the outdoor air is, together with the air that has been taken in from the room, heated when it travels through the first indoor heat exchanger 11a functioning as a condenser or is cooled and dehumidified when it travels through the second indoor heat exchanger 11b functioning as an evaporator. The air that has traveled through the first indoor heat exchanger 11a and been heated and the dehumidified air that has traveled through the second indoor heat exchanger 11b and been dehumidified are mixed together, blown out from the indoor unit 2, and supplied to the room.

Further, for example, in the water filter phase F2, in a case where the normal dehumidifying action and the ventilation air supplying action are concurrently executed, in the indoor unit 2, the outdoor air that is not being actively humidified in the humidifying section 57 is blown out from the opening in the end portion of the air suction and discharge hose 6. The outdoor air is blown out on the upstream side of the indoor heat exchanger 11 in terms of the airflow traveling through the indoor heat exchanger 11 because the opening in the end portion of the air suction and discharge hose 6 is disposed in the fore of the indoor heat exchanger 11. For this reason, the outdoor air is, together with the air that has been taken in from the room, cooled and dehumidified when it travels through the first indoor heat exchanger 11a and the second indoor heat exchanger 11b functioning as evaporators. The dehumidified air that has traveled through the first indoor heat exchanger 11 a and the second indoor heat exchanger 11b and been dehumidified is mixed together, blown out from the indoor unit 2, and supplied to the room.

In the water filter phase F2, there is the fear that the air suction and discharge hose 6 and so forth will freeze because the dehumidifying action and the air supplying action are concurrently performed. For this reason, in a case where the control unit 60 has judged that there is the fear that the air suction and discharge hose 6 and so forth will freeze because the outside air that has been humidified by the humidifying section 57 is supplied to the indoor unit 2, the deodorizing operation control unit 62 switches states from the humidifying state to the ventilating state in the air supplying action. Further, in the water filter phase F2, control that switches from the humidifying state to the ventilating state on the basis of the temperature of the indoor heat exchanger 11 is not performed.

Moreover, in the humidity adjustment phase F3, the deodorizing operation control unit 62 performs action control of the flap drive motor 9a such that the angle of inclination of the horizontal flap 9 maintains the predetermined angle at the time of the water filter phase F2. Further, in the humidity adjustment phase F3, the deodorizing operation control unit 62 controls the rotation of the indoor fan 12 such that the indoor fan 12 reaches the predetermined air volume at the time of the water filter phase F2. Moreover, in the humidity adjustment phase F3, the deodorizing operation control unit 62 performs control that stops the driving of the humidifying unit 50 such that the outdoor air is not supplied to the indoor unit 2.

Further, in the humidity adjustment phase F3, the deodorizing operation control unit 62 performs a dehumidifying action. In the present embodiment, the dehumidifying action in the humidity adjustment phase F3 is an action that is the same as the normal dehumidifying action in the dehumidifying operation and is an action that is the same as the normal dehumidifying action in the water filter phase F2.

Further, the deodorizing operation control unit 62 performs switching of the steam-out phase F1, the water filter phase F2, and the humidity adjustment phase F3 in the dehumidifying operation on the basis of an execution time of the deodorizing operation preset by the user by the remote controller 80 or the like. Specifically, the deodorizing operation control unit 62 applies the execution time of the deodorizing operation preset by the user to the expressions shown below to calculate the execution time of each phase.

$$\alpha = (\text{execution time of deodorizing operation} - \text{predetermined first amount of time}) / 2$$

$$\text{Steam-out phase F1 execution time} = \text{predetermined first amount of time} + \alpha$$

$$\text{Water filter phase F2 execution time} = \alpha - \text{predetermined second amount of time}$$

$$\text{Humidity adjustment phase F3 execution time} = \text{predetermined second amount of time}$$

The deodorizing operation control unit 62 switches each phase on the basis of the execution time of each phase it has calculated in this way. For example, in a case where the predetermined first amount of time is 1 hour, the predetermined second amount of time is 30 minutes, and the execution time of the deodorizing operation has been set to 5 hours by the user, the deodorizing operation control unit 62 calculates the execution time of the steam-out phase F1 as 3 hours (predetermined first amount of time + $\alpha$), calculates the execution time of the water filter phase F2 as 1 hour 30 minutes ($\alpha$ - second predetermined amount of time), and calculates the execution time of the humidity adjustment phase F3 as 30 minutes (predetermined second amount of time). Additionally, the deodorizing operation control unit 62 switches phases in order of the steam-out phase F1, the water filter phase F2, and the humidity adjustment phase F3 on the basis of the execution time of each phase it has calculated. For this reason, in this case, as the deodorizing operation, the steam-out phase F1 is performed for 3 hours, thereafter the water filter phase F2 is performed for 1 hour 30 minutes, and thereafter the humidity adjustment phase F3 is performed for 30 minutes.

The predetermined first amount of time is decided on the basis of the amount of time in which the humidity in the room can be raised to the target humidity at which there is a deodorizing effect by performing the air supplying action. Further, the predetermined second amount of time is decided on the basis of the amount of time in which the humidity in the room can be returned to a humidity that the room environment after the end of the deodorizing operation does not impart a feeling of discomfort to the user and at which the fear that mold and so forth will propagate in the room can be reduced by performing only the dehumidifying action and without performing the air supplying action.

Further, in a case where the execution time of the deodorizing operation has been changed by the user when the deodorizing operation is being executed, the deodorizing operation control unit 62 recalculates the execution time of each phase on the basis of the execution time after the change. Additionally, the deodorizing operation control unit 62 switches each phase on the basis of the recalculated execution time of each phase. In a case where there is a phase that has already been executed when the execution time has been changed by the user, the deodorizing operation control unit 62 does not perform control that switches to the phase that has already been executed.

Further, the deodorizing operation control unit 62 calculates the execution time of each phase such that the humidity adjustment phase F3 is reliably executed in the deodorizing operation excluding a case where a command to stop the deodorizing operation is given by the user. For this reason, for example, even in a case where a setting has been changed by the user such that the execution time of the deodorizing operation becomes shorter, the deodorizing operation control unit 62 ensures the execution time of the humidity adjustment phase F3 by shortening the execution time of the steam-out phase F1 or the water filter phase F2.

In a case where the execution time of the deodorizing operation has been set by the user to less than a predetermined third amount of time (e.g., 5 hours), a remote controller control unit that controls the remote controller 80 controls the remote controller 80 such that the data of the execution time set by the user are not transmitted to the control unit 60 and controls a display component of the remote controller 80 such that an error message is displayed on the display component.

The deodorizing operation control unit 62 can calculate the execution time of each phase even in a case where data of an execution time less than the predetermined third amount of time have been transmitted from the remote controller 80. In a case where data of an execution time less than the predetermined third amount of time have been transmitted, the deodorizing operation control unit 62 adjusts the allocation of the execution time of each phase on the basis of a priority ranking of each phase. The priority ranking of each phase is the order of the humidity adjustment phase F3, the steam-out phase F1, and the water filter phase F2.

Moreover, the deodorizing operation is an operation performed in a case where a command to start the deodorizing operation from the user via the remote controller 80 or the like has been given. Specifically, in a case where the control unit 60 has received a command to start the deodorizing operation that has been transmitted by the user via the remote controller 80 or the like, the deodorizing operation in the air conditioner 1 is started as a result of the deodorizing operation control unit 62 controlling the various devices. Consequently, even in a case where the operation of the air conditioner 1 is stopped or a case where the normal operations are being performed in the air conditioner 1, the deodorizing operation is started in the air conditioner 1 when a command to start the deodorizing operation is given from the user.

Further, the deodorizing operation is stopped in a case where a command to stop the deodorizing operation has been given from the user via the remote controller 80 or the like, or in a case where the execution time has elapsed since the operation has been started, or in a case where a command to start another operation (e.g., the cooling operation) from the user has been given during execution of the operation. Included in the case where a command to stop the deodorizing operation from the user has been given are, for example, a case where an operation stop button disposed on the remote controller 80 has been pressed by the user and a case where an operation stop switch disposed on the indoor unit 2 has been pressed by the user. Further, the case where the execution time has elapsed since the operation has been started is a case where the deodorizing operation execution time that had been set by the user before the start of the deodorizing operation has elapsed and the operation has ended nornally-that is, a case where the steam-out phase F1, the water filter phase F2, and the humidity adjustment phase F3 have been executed on the basis of the execution time of each phase.

Further, the deodorizing operation control unit 62 controls the various devices on the basis of various operation settings unique to the deodorizing operation that are separate from various operation settings of the normal operations (operating mode setting, set temperature, set humidity, air direction setting other than up and down/left; and right, air volume setting, ventilation setting, etc.) transmitted from the remote controller 80 by the user, so after the end of the deodorizing operation, the control unit 60 judges whether or not the various operation settings have returned to the settings before the start of the deodorizing operation, and in a case where it has judged that the various operation settings have not returned to the settings before the start of the deodorizing operation, it performs control that returns the various operation settings to the settings before the start of the deodorizing operation. For this reason, even in a case where the user starts the normal operations such as the cooling operation without involving the remote controller 80, the normal operation control unit 61 can start the normal operations in the settings before the start of the deodorizing operation. Thus, the fear that a feeling of discomfort will be imparted to the user can be reduced.

<Control Action of Deodorizing Operation Control Unit>

Next, the control action of the deodorizing operation control unit 62 will be described. Below, a case where the execution time of the deodorizing operation is set to 5 hours by the user, the predetermined first amount of time is 1 hour, and the predetermined second amount of time is 30 minutes will be described as an example. Further, the description below is an example of the deodorizing operation in regard to a case where, other than a command to start the deodorizing operation being transmitted from the user, no other control command is transmitted-that is, a case where the execution time has elapsed since the operation has been started.

In a case where the control unit 60 has received a command to start the deodorizing operation that has been given via the remote controller 80 from the user, the deodorizing operation control unit 62 starts the deodorizing operation in the air conditioner I by controlling the various devices. First, the deodorizing operation control unit 62 decides the state in the steam-out phase F1 to be any one state of the ventilating and cooling state, the humidifying-only state, and the humidifying and heating state on the basis of the room temperature value and the outdoor temperature value at the time when the command to start the deodorizing operation was given and controls the various devices so as to become the decided state. Thus, the steam-out phase F1 of the deodorizing operation in the air conditioner 1 is performed.

Then, when 3 hours elapses since the steam-out phase F1 of the deodorizing operation has been executed, the deodorizing operation control unit 62 switches phases from the steam-out phase F1 to the water filter phase F2. At this time, the deodorizing operation control unit 62 judges which dehumidifying action of the reheat dehumidifying action and the normal dehumidifying action to perform in the water filter phase F2 on the basis of the room temperature value at the time when 3 hours elapsed since the steam-out phase F1 was executed. Moreover, the deodorizing operation control unit 62 judges which air supplying action of the air supplying action in the humidifying state (humidified air supplying action) and the air supplying action in the ventilating state (ventilation air supplying action) to perform in the water filter phase F2 on the basis of the outdoor air temperature value at the time when 3 hours elapsed since the steam-out phase F2 was executed. Then, the deodorizing operation control unit 62 concurrently executes the judged dehumidifying action and the judged air supplying action, whereby the water filter phase F2 of the deodorizing operation in the air conditioner 1 is performed.

Further, when 1 hour 30 minutes elapses since the water filter phase F2 has been executed, the deodorizing operation control unit 62 switches phases from the water filter phase F2 to the humidity adjustment phase F3 by stopping the air supplying action and performing the dehumidifying action. Then, when 30 minutes elapses since the phase has switched from the water filter phase F2 to the humidity adjustment phase F3, the deodorizing operation control unit 62 stops the dehumidifying action and stops the deodorizing operation in the air conditioner 1. Thus, the deodorizing operation ends.

In this way, the deodorizing operation is performed in the air conditioner. In a case where the execution time of the deodorizing operation has been set to 5 hours like in the above-described example, the following effects can be expected in each phase of the deodorizing operation. Further, in a case where the execution time of the deodorizing operation has been set to more than 5 hours, there is the potential for the effects in the deodorizing operation to further improve.

At 1 hour since the steam-out phase F1 has started, the humidity in the room is raised by the air supplying action. Further, from 1 hour to 3 hours since the steam-out phase F1 has started, odorous components permeating fabric and so forth in the room are released into the air while the room is maintained at a high humidity by the air supplying action.

The water filter phase F2 is started after the end of the steam-out phase F1, whereby the odorous components in the room are dissolved and recovered in the dew condensation water of the indoor heat exchanger 11 and are discharged as drain by the humidifying action, and the high-humidity air is applied to the indoor heat exchanger 11 functioning as an evaporator by the air supplying action; thus, the efficiency with which the odorous components in the room is improved and the humidity in the room is raised.

The humidity adjustment phase F3 is started after the end of the water filter phase F2, whereby the humidity in the room is lowered by the dehumidifying action even in a case where the room humidity had been high in the steam-out phase F1.

Further, an air purifying filter is placed between the air intake port 2a disposed in the upper portion of the indoor unit 2 and the indoor heat exchanger 11, and the air that has been taken into the indoor unit 2 from the air intake port 2a is sent to the indoor heat exchanger 11 via the air purifying filter. For this reason, in the deodorizing operation, the odorous components in the room air are recovered by the dehumidifying action of the water filter phase F2 and removal of the odorous components in the room is performed as a result of the odorous components being adsorbed in the air purifying filter.

<Characteristics>

(1)
Conventionally, there have been proposed methods of recovering, together with condensed water, odorous components and so forth included in air by condensing air whose relative humidity has been raised by humidification or the like.

For example, the air purifier disclosed in JP-A No. 2005-106358 is equipped with a humidifying unit, which humidifies air that it has taken in from a room, and a dehumidifying unit, which dehumidifies the air that has been humidified by the humidifying unit. In this air purifier, contaminated air that the air purifier has taken in from the room has its humidity raised by the humidifying unit, whereby high-humidity air is generated, and the generated high-humidity air is dehumidified in the dehumidifying unit. At this time, the air purifier purifies the air after dehumidification by taking airborne contaminants into condensed water that has been obtained by dehumidification. In this way, this air purifier has an air purifying function of taking in and purifying the air in the room and returning the purified air to the room.

Further, the volatile organic compound removing apparatus disclosed in JP-A No. 2005-125085 is equipped with a humidifying and dehumidifying device having a humidifying function and a dehumidifying function. In this removing apparatus, after the end of a first step of humidifying a room, a second step of dehumidifying the air in the humidified room is performed. This removing apparatus causes volatile organic compounds adhering to building materials and so forth to be released into the air by humidifying the room in the first step and condenses, together with the air, the released volatile organic compounds and recovers condensed water including the volatile organic compounds in the second step. Thus, the removing apparatus performs removal of volatile organic compounds in the room.

However, in the air purifier disclosed in JP-A No. 2005-106358, there is the fear that it cannot sufficiently remove odorous components adhering to fabric and building materials in the room because it humidifies the air that has been taken in from the room.

Further, in the volatile organic compound removing apparatus disclosed in JP-A No. 2005-125085, there is the fear that, in a case where it has moved to the second step without being able to sufficiently release into the air the odorous components permeating fabric and building materials in the room in the first step in which the room is humidified, the removal of odorous components in the room is not sufficiently performed in the second step. For this reason, there is the fear that deodorization of the room is not sufficiently performed even in a case where the air purifying function or the removing apparatus described above is installed in an air conditioner.

Therefore, in the above-described embodiment, in the water filter phase F2 of the deodorizing operation, the dehumidifying action and the air supplying action are concurrently executed by the deodorizing operation control unit 62. For this reason, the room can be given a high humidity while the odorous components in the room are recovered from the air together with the water by the dehumidifying action, so odorous components permeating fabric and building materials in the room can be removed compared to a case where only the dehumidifying action is executed in the deodorizing operation.

Thus, the room deodorizing efficiency with which the room is deodorized can be improved by causing the odorous components in the room to be released into the room air and recovering and removing the odorous components that have been released.

(2)

In the above-described embodiment, the humidifying unit 50 has the humidifying section 57 that can generate humidified air. Further, the outdoor air including the humidified air generated by the humidifying section 57 is supplied to the indoor unit 2 from the humidifying unit 50. In this air conditioner 1, because the humidified air is generated from the outdoor air in the humidifying section 57, air of a higher humidity can be supplied to the room compared to an air conditioner not equipped with the humidifying section.

Thus, the deodorizing effect of causing odorous components permeating fabric and building materials in the room to be released into the room air can be improved.

(3)

In the above-described embodiment, the deodorizing operation control unit 62 controls the various devices of the humidifying unit 50 to thereby switch between the humidifying state and the ventilating state in the air supplying action. For this reason, power consumption in the humidifying unit 50 can be reduced compared to a case where the humidifying section is controlled such that it is always driven.

Thus, energy saving can be realized.

(4)

In the above-described embodiment, in the steam-out phase F1 and the water filter phase F2 of the deodorizing operation, the deodorizing operation control unit 62 controls the various devices of the humidifying unit 50 such that the humidifying state and the ventilating state in the air supplying action switch on the basis of the outdoor air temperature value detected by the outdoor air temperature thermistor 91. Specifically, in a case where the outdoor air temperature is equal to or greater than the predetermined temperature, the deodorizing operation control unit 62 controls the various devices of the humidifying unit 50 so as to achieve the ventilating state, that is, a state in which the active generation of humidified air by the humidifying section 57 is not performed, and in a case where the outdoor air temperature is less than the predetermined temperature, the deodorizing operation control unit 62 controls the various devices of the humidifying unit 50 so as to achieve the humidifying state, that is, a state in which the active generation of humidified air by the humidifying section 57 is performed.

For this reason, in a hot and humid climate where, in a case where the outdoor air temperature is equal to or greater than 30°C, it is expected that there will be an absolute humidity corresponding to 60% at 30°C at a rate of occurrence of about 85%, it is expected that the absolute humidity will be high in a case where the outdoor air temperature is high, so at a time when the outdoor air temperature is high, even when the state of the air supplying action is the ventilating state in which the active generation of humidified air is not performed by the humidifying section 57, outdoor air whose water content is higher than that of the room air can be supplied to the indoor unit 2.

Thus, high-humidity air can be supplied to the room.

Further, in the above-described embodiment, assuming a high and humid climate, the state of the air supplying action in the deodorizing operation is switched between the humidifying state and the ventilating state on the basis of the outdoor air temperature, so power saving can be realized and a room deodorizing effect can be obtained.

(5)

In the above-described embodiment, in the deodorizing operation, the deodorizing operation control unit 62 switches phases in the order of the steam-out phase F1, the water filter phase F2, the humidity adjustment phase F3. For this reason, in the steam-out phase F1, the outdoor air is humidified or is not humidified, travels through the air suction and discharge hose 6, and is supplied to the indoor unit 2. Further, in the steam-out phase F1, the heating action and the cooling action are performed such that the room temperature value enters the target temperature value range W. Consequently, in the steam-out phase F1, odorous components permeating fabric and building materials in the room can be released into the room air because the relative humidity of the room air rises.

Further, in the water filter phase F2, the dehumidifying action and the air supplying action are concurrently executed. For this reason, in the water filter phase F2, as a result of the dehumidifying action being executed, the room air including odorous components whose relative humidity has been raised in the steam-out phase F1 can be taken into the indoor unit 2 and condensed, and the odorous components that had been included in the room air can be recovered together with condensed water. Further, in the water filter phase F2, as a result of the air supplying action being executed, odorous components in the room that were not completely released in the steam-out phase F1 can further be released.

Moreover, in the humidity adjustment phase F3, as a result of the dehumidifying action being performed, the humidity of the room air whose relative humidity has been raised in the water filter phase F2 can be lowered. Consequently, the comfort of the room environment after the end of the deodorizing operation can be improved. Further, by lowering the humidity of the room air in the humidity adjustment phase F3, the fear that mold and so forth will propagate in the room can be reduced.

Thus, a deodorizing operation whose deodorizing efficiency is good can be performed.

Further, in the above-described embodiment, the opening in the end portion of the air suction and discharge hose 6 to which the outdoor air is supplied from the humidifying unit 50 is disposed in the fore of the indoor heat exchanger 11, so the outdoor air is blown out on the upstream side of the indoor heat exchanger 11 in terms of the airflow traveling through the indoor heat exchanger 11. For this reason, the indoor heat exchanger 11 can always maintain a humid state in the water filter phase F2. For this reason, in the filter phase, the amount of dew condensation of the water in the indoor heat exchanger functioning as an evaporator can be increased. Consequently, odorous components can be further recovered from the air passing through the indoor heat exchanger 11.

Thus, the deodorizing effect can be improved.

(6)

In order to cause odorous components permeating fabric and building materials in a room to be released into the room air, it is preferable to change the room environment to a predetermined environment such as a hot and humid environment. For example, in a case where the room temperature is extremely low even when the room environment is a high-humidity environment, there is the fear that the effect of causing the odorous components in the room to be released into the air will decrease.

Therefore, in the above-described embodiment, in the steam-out phase F1, the air supplying action is performed such that the room humidity value becomes equal to or greater than the target humidity (e.g., 60%) value. Further, in the steam-out phase F1, the cooling action or the heating action is performed such that the room temperature value enters the target temperature value range W. For this reason, the fear that the effect of causing the odorous components in the room to be released into the air will decrease can be reduced.

Further, in the above-described embodiment, in the steam-out phase F1, the heating action or the cooling action is performed such that the room temperature value enters the target temperature value range W. For this reason, the fear that the room environment will worsen as a result of the room temperature rising above the predetermined first temperature can be reduced. Further, the fear that the deodorizing effect will drop because of the absolute humidity in the room falling as a result of the room temperature falling below the predetermined second temperature can be reduced.

Moreover, in the above-described embodiment, in the water filter phase F2, the various devices such as the compressor 21 are controlled such that either dehumidifying action of the normal dehumidifying action and the reheat dehumidifying action is performed on the basis of the room temperature at the time of the end of the steam-out phase F1. Specifically, the normal dehumidifying action is performed in a case where the room temperature at the time of the end of the steam-out phase F1 is high, and the reheat dehumidifying action is performed in a case where the room temperature at the time of the end of the steam-out phase F1 is low. For this reason, in wintertime and so forth when the temperature in the room is low, the drop in the room temperature can be made gradual compared to a case where the normal dehumidifying action is performed. Consequently, in the water filter phase F2 the fear that the effect of causing the odorous components in the room to be released into the air will decrease can be reduced. Thus, the deodorizing effect can be improved.

(7)

In the above-described embodiment, in the steam-out phase F 1 and the water filter phase F2 of the deodorizing operation, the air suction and discharge fan 54 is controlled such that it rotates at the largest air volume of the air volumes generated by the air suction and discharge fan 54 at the time of the humidifying operation. For this reason, the volume of the outdoor air supplied to the indoor unit 2 from the humidifying unit 50 can be increased compared to a case where the air volume of the air suction and discharge fan is small, for example. Consequently, the effect of causing the odorous components in the room to be released into the air can be improved.

Thus, the deodorizing effect can be improved.

(8)

In the above-described embodiment, the deodorizing operation is performed by humidifying and dehumidifying the air. For this reason, safety in the deodorizing operation can be ensured compared to a case where ions or chemical products are used and the deodorizing operation is performed.

<Modifications>

(A)

In the above-described embodiment, in the air supplying action of the water filter phase F2, the various devices of the humidifying unit 50 are controlled such that the humidifying state and the ventilating state switch.

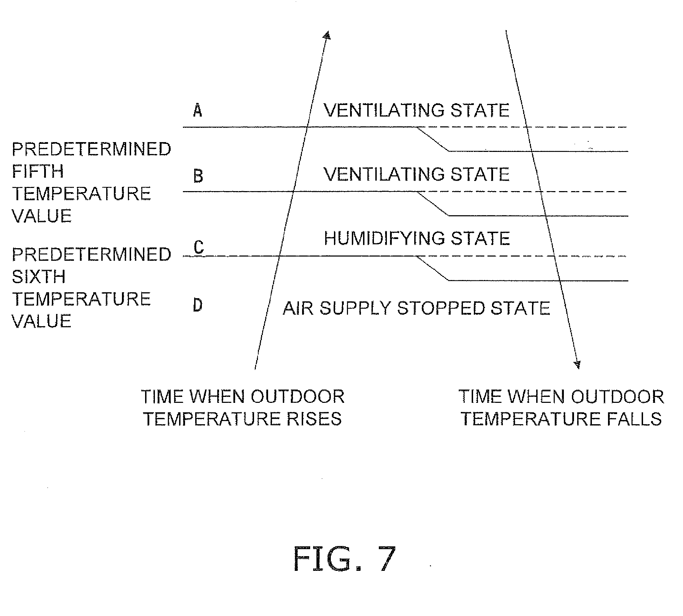

Instead of this, in the air supplying action of the water filter phase F2, the humidifying state, the ventilating state, and an air supply stopped state may also be switched. The air supply stopped state is a state in which the supply of humidified air from the humidifying unit to the indoor unit is stopped. Below, state switching control of the air supplying action in the water filter phase F2 by the deodorizing operation control unit will be described using FIG. 7. A predetermined fifth temperature value and a predetermined sixth temperature value below are temperature values where the predetermined fifth temperature value is greater than the predetermined sixth temperature value. In the water filter phase F2, the deodorizing operation control unit controls the various devices of the humidifying unit such that the humidifying state, the ventilating state, and the air supply stopped state switch on the basis of the outdoor air temperature value detected by the outdoor air temperature thermistor.

In a case where the outdoor temperature value is less than the predetermined sixth temperature (e.g., 0°C) value, the deodorizing operation control unit controls the various devices of the humidifying unit so as to achieve the air supply stopped state in which the outdoor air is not supplied to the room. Specifically, in the air supply stopped state, the deodorizing operation control unit controls the air suction and discharge fan such that the rotation of the air suction and discharge fan stops. Further, in a case where the outdoor temperature value is equal to or greater than the predetermined sixth temperature (e.g., 0°C) value and less than the predetermined fifth temperature (e.g., 24°C) value, the deodorizing operation control unit controls the various devices of the humidifying unit so as to achieve the humidifying state in which outdoor air that has been humidified by the humidifying section is supplied to the room. Moreover, in a case where the outdoor temperature value is equal to or greater than the predetermined fifth temperature (e.g., 24°C) value, the deodorizing operation control unit controls the various devices of the humidifying unit so as to achieve the ventilating state in which outdoor air that has not been humidified by the humidifying section is supplied to the room. For this reason, excluding a case where the outdoor temperature value is less than the predetermined sixth temperature value, in the water filter phase F2, the dehumidifying action and the air supplying action are concurrently executed by the deodorizing operation control unit.

In this way, by stopping the air supplying action in a case where the outdoor temperature is extremely lower than the room temperature, a drop in the temperature of the room air caused by supplying the outdoor air can be suppressed. Further, even in a case where the air supplying action has been performed in the air supply stopped state, deodorization of the room can be performed because odorous components in the air can be adsorbed in the air purifying filter.

Thus, the effect of causing the odorous components in the room to be released into the air can be improved, so the deodorizing efficiency can be improved.

Further, in addition to this, in the water filter phase F2, in A zone shown in FIG. 7, the cooling action at the time of the cooling operation may be performed, in B zone and C zone, the dehumidifying action may be performed, and in C zone, the dehumidifying action in a thermo-off state may be performed. The zones are zones where the outdoor temperature value is high in the order of A zone, B zone, C zone, and D zone.

(B)

In the above-described embodiment, in the steam-out phase F1 and the water filter phase F2 of the deodorizing operation, the humidifying state and the ventilating state of the air supplying action are switched on the basis of the outdoor air temperature value detected by the outdoor air temperature thermistor 91.

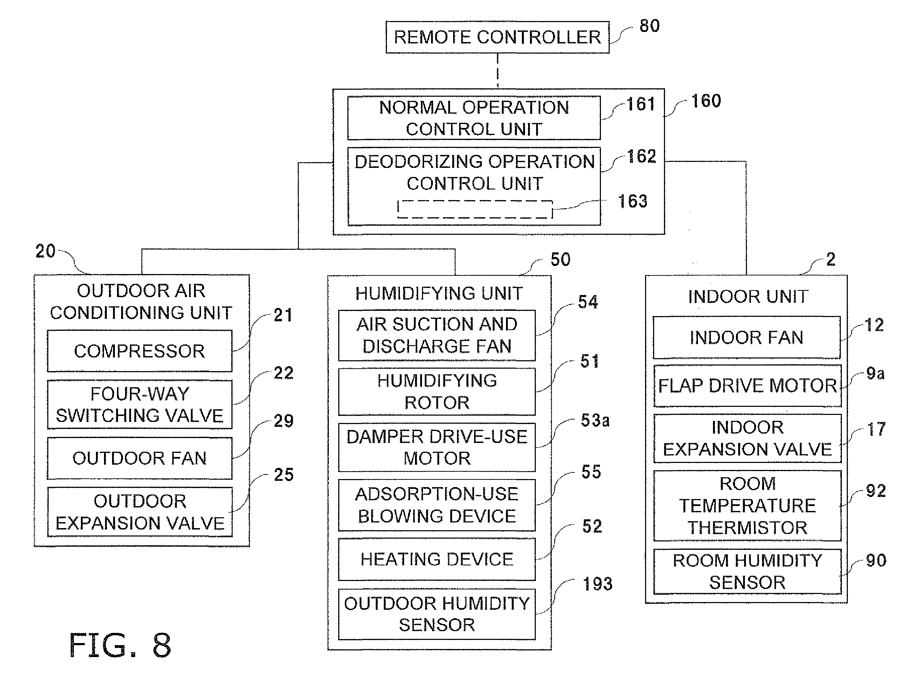

Instead of this, the ventilating state and the humidifying state of the air supplying action may be switched on the basis of the humidity of the outdoor air. For example, as shown in FIG. 8, an air conditioner 1 where the humidifying unit 50 is equipped with an outdoor humidity sensor 193 that detects the humidity of the outdoor air will be described. In this air conditioner 1, in the air supplying action, the humidifying state and the ventilating state are switched on the basis of the outdoor humidity value detected by the outdoor humidity sensor 193. Specifically, in a case where the outdoor humidity value is equal to or greater than a predetermined first humidity (e.g., 60%) value, a normal operation control unit 161 and a deodorizing operation control unit 162 perform the air supplying action in the ventilating state. Further, in a case where the outdoor humidity value is less than the predetermined first humidity (e.g., 60%) value, the normal operation control unit 161 and the deodorizing operation control unit 162 perform the air supplying action in the humidifying state. That is, the normal operation control unit 161 and the deodorizing operation control unit 162 switch the state of the air supplying action to the ventilating state in a case where the outdoor humidity is high and switch the state of the air supplying action to the humidifying state in a case where the outdoor humidity is low. For this reason, high-humidity air of the outdoors can be supplied to the room as a result of the air supplying action being performed.

Further, compared to a case where the ventilating state and the humidifying state are switched as a result of the humidity of the outdoor air being estimated from the outdoor temperature, the fear that the humidity of the outdoor air will be mistakenly determined can be reduced. In FIG. 8, reference sign 160 represents a control unit and reference sign 163 represents an air volume adjusting unit. Further, in FIG. 8, regarding reference signs other than those of the control unit 160, the normal operation control unit 161, the deodorizing operation control unit 162, the air volume adjusting unit 163, and the outdoor humidity sensor 193, the same reference signs as those in the above-described embodiment are given thereto.

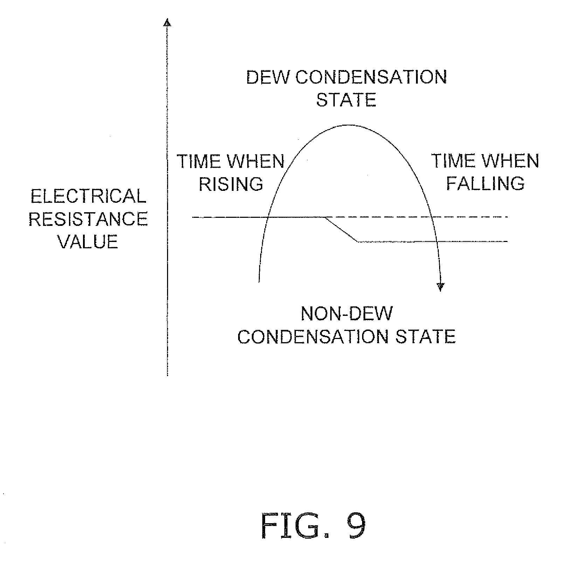

Further, the ventilating state and the humidifying state of the air supplying action may be switched on the basis of whether or not dew condensation is occurring in the air suction and discharge hose. For example, an air conditioner where a dew condensation sensor whose electrical resistance value rises abruptly in a high humidity region is disposed inside the air suction and discharge hose will be described (see FIG. 9).

In this air conditioner, in a case where the electrical resistance value transmitted from the dew condensation sensor has become equal to or greater than a predetermined value when the air supplying action in the humidifying state is being performed, the control unit determines that the inside of the air suction and discharge hose is in a dew condensation state and switches states from the humidifying state to the ventilating state or stops the air supplying action. Further, in a case where the electrical resistance value transmitted from the dew condensation sensor has become less than the predetermined value when the air supplying action in the ventilating state is being performed, the control unit determines that the inside of the air suction and discharge hose is in a non-dew condensation state and switches states from the ventilating state to the humidifying state or starts the air supplying action. In this way, in this air conditioner, the state in the air suction and discharge hose can be more directly monitored compared to a conventional air conditioner where the dew condensation state in the air suction and discharge hose had been estimated from the outdoor air temperature or the like. Consequently, the fear that the functions of the humidifying unit, such as the volume of the humidified air supplied to the indoor unit being controlled, will be restricted even though dew condensation is not actually forming in the air suction and discharge hose can be reduced.

(C)

In the above-described embodiment, the opening in the end portion of the air suction and discharge hose 6 to which the outdoor air is supplied is disposed in the fore of the indoor heat exchanger 11. For this reason, the outdoor air is blown out onto the surface of the indoor heat exchanger 11.

Instead of this, the air conditioner may also be given a configuration where the outdoor air does not travel inside the indoor unit but is directly supplied to the room from the humidifying unit. By giving the air conditioner this configuration, high-humidity air that has not been dehumidified can be supplied to the room in the water filter phase of the deodorizing operation.

(D)

In the above-described embodiment, the dehumidifying action and the humidifying action are concurrently executed in the water filter phase, but instead of this, the dehumidifying action and the humidifying action may also be alternately executed. Further, in the deodorizing operation, the air in the room may also be dehumidified by the dehumidifying action after the outdoor air has been supplied to the room by the air supplying action.

## INDUSTRIAL APPLICABILITY

The present invention can improve the efficiency with which a room is deodorized by concurrently executing an air supplying action and a dehumidifying action, so application thereof to an air conditioner that performs a deodorizing operation is effective.

## REVERENCE SIGNS LIST

| 1 | Air Conditioner |
| --- | --- |
| 11 | Indoor Heat Exchanger |
| 11a | First Indoor Heat Exchanger (First Indoor Heat Exchange Component) |
| 11b | Second Indoor Heat Exchanger (Second Indoor Heat Exchange Component) |
| 50 | Humidifying Unit (Air Supplying Means) |
| 54 | Air Suction and Discharge Fan (Air Supplying Fan) |
| 57 | Humidifying Section |
| 91 | Outdoor Air Temperature Thermistor (Temperature Detecting Component) |
| 193 | Outdoor Humidity Sensor (Humidity Detecting Component) |
| 60, 160 | Control Unit |
| 63, 163 | Air Volume Adjusting Unit |
| F1 | Steam-out Phase (High-humidity Phase) |
| F2 | Water Filter Phase (Concurrent Dehumidification and Humidification Execution Phase) |
| F3 | Humidity Adjustment Phase |

## CITATION LIST

## PATENT LITERATURE

Patent Literature 1: JP-A No. 2005-106358
Patent Literature 2: JP-A No. 2005-125085

## Claims

1. An air conditioner (1) comprising:

   an indoor heat exchanger (11) that performs heat exchange with air in a room;
   air supplying means (50) that can supply humid air whose water content is higher than that of the air in the room to the room; and
   a control unit (60, 160) that performs a deodorizing operation including a concurrent dehumidification and humidification execution phase (F2) in which a dehumidifying action, where the air in the room is dehumidified in the indoor heat exchanger, and an air supplying action, where the humid air is supplied to the room by the air supplying means, are concurrently executed.

2. The air conditioner according to claim 1, wherein the air supplying means has a humidifying section (57) that can humidify air supplied to the room.

3. The air conditioner according to claim 2, wherein the control unit controls the air supplying means to thereby switch between a first state, where it supplies the humid air including humidified air generated by the humidifying section to the room, and a second state, where it supplies the humid air including outdoor air to the room.

4. The air conditioner according to claim 3, further comprising a temperature detecting component (91) that detects the temperature of the outdoor air, wherein the control unit switches between the first state and the second state on the basis of the detection result of the temperature detecting component.

5. The air conditioner according to claim 3, further comprising a humidity detecting component (193) that detects the humidity of the outdoor air, wherein the control unit switches between the first state and the second state on the basis of the detection result of the humidity detecting component.

6. The air conditioner according to any of claims 1 to 5, wherein in the deodorizing operation, the control unit switches phases in the order of a high-humidity phase (F1) including the air supplying action, the concurrent dehumidification and humidification execution phase, and a humidity adjustment phase (F3) including the dehumidifying action.

7. The air conditioner according to claim 6, wherein in the high-humidity phase, the control unit performs control such that the temperature in the room becomes equal to or greater than a predetermined temperature and performs control such that the humidity in the room becomes equal to or greater than a predetermined humidity.

8. The air conditioner according to any of claims 1 to 7, wherein
the indoor heat exchanger has a first indoor heat exchange component (11a) and a second indoor heat exchange component (11b), and
in the concurrent dehumidification and humidification execution phase, the control unit causes the first indoor heat exchange component to function as a heat radiator or a heat absorber and causes the second indoor heat exchange component to function as a heat absorber on the basis of the temperature in the room.

9. The air conditioner according to any of claims 1 to 8, wherein
the air supplying means has an air supplying fan (54) for supplying the outdoor air to the room, and
the control unit has an air volume adjusting unit (63,163) that adjusts the air volume of the air supplying fan, with the control unit performing control of the volume of the humid air supplied to the room by using the air volume adjusting unit to adjust the air volume of the air supplying fan in the deodorizing operation.

FIG. 1

FIG. 2

EP 2 333 444 A1

FIG. 3

FIG. 4

EP 2 333 444 A1

| | F1 | F2 | F3 |
|---|---|---|---|
| OPERATE / STOP | | | |
| OPERATION ACTION | COOLING / HEATING / (FAN) | DEHUMIDIFICATION | DEHUMIDIFICATION |
| VENTILATION / HUMIDIFICATION SETTING | VENTILATE / HUMIDIFY | VENTILATE / HUMIDIFY | STOP |
| ROOM TEMPERATURE / HUMIDITY SETTING | TARGET TEMPERATURE VALUE RANGE, TARGET HUMIDITY | TARGET TEMPERATURE | NOT SET |
| INDOOR FAN OFF | | | |
| HORIZONTAL FLAP OFF | | | |

FIG. 5

VENTILATING AND COOLING STATE
(VENTILATION AIR SUPPLYING ACTION
+ COOLING ACTION)

TIME WHEN ROOM
TEMPERATURE RISES

TIME WHEN ROOM
TEMPERATURE FALLS

FIRST
PREDETERMINED
TEMPERATURE
VALUE

W

HUMIDIFYING-ONLY STATE
(HUMIDIFIED AIR
SUPPLYING ACTION)

SECOND
PREDETERMINED
TEMPERATURE
VALUE

TIME WHEN ROOM
TEMPERATURE RISES

TIME WHEN ROOM
TEMPERATURE FALLS

HUMIDIFYING AND HEATING STATE
(HUMIDIFIED AIR SUPPLYING ACTION +
HEATING ACTION)

# FIG. 6

A VENTILATING STATE

PREDETERMINED
FIFTH
TEMPERATURE
VALUE

B VENTILATING STATE

PREDETERMINED
SIXTH
TEMPERATURE
VALUE

C HUMIDIFYING STATE

D AIR SUPPLY STOPPED STATE

TIME WHEN OUTDOOR
TEMPERATURE RISES

TIME WHEN OUTDOOR
TEMPERATURE FALLS

FIG. 7

FIG. 8

FIG. 9

### INTERNATIONAL SEARCH REPORT

| | International application No. |
|---|---|
| | PCT/JP2009/004374 |

**A. CLASSIFICATION OF SUBJECT MATTER**
*F24F11/02*(2006.01)i, *F24F1/00*(2006.01)i, *F24F6/00*(2006.01)i

According to International Patent Classification (IPC) or to both national classification and IPC

**B. FIELDS SEARCHED**

Minimum documentation searched (classification system followed by classification symbols)
F24F11/02, F24F1/00, F24F6/00

Documentation searched other than minimum documentation to the extent that such documents are included in the fields searched
Jitsuyo Shinan Koho          1922-1996   Jitsuyo Shinan Toroku Koho   1996-2009
Kokai Jitsuyo Shinan Koho    1971-2009   Toroku Jitsuyo Shinan Koho   1994-2009

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 2006-141470 A  (Norihiro AMO),<br>08 June 2006 (08.06.2006),<br>paragraphs [0020] to [0034]; fig. 1 to 6<br>(Family: none) | 1,2,6,7,9<br>3-5,8 |
| Y | JP 2004-76975 A  (Daikin Industries, Ltd.),<br>11 March 2004 (11.03.2004),<br>paragraphs [0034] to [0039]; fig. 5, 6<br>(Family: none) | 3-5,8 |

☐ Further documents are listed in the continuation of Box C.          ☐ See patent family annex.

| | | |
|---|---|---|
| * | Special categories of cited documents: | |
| "A" | document defining the general state of the art which is not considered to be of particular relevance | |
| "E" | earlier application or patent but published on or after the international filing date | |
| "L" | document which may throw doubts on priority claim(s) or which is cited to establish the publication date of another citation or other special reason (as specified) | |
| "O" | document referring to an oral disclosure, use, exhibition or other means | |
| "P" | document published prior to the international filing date but later than the priority date claimed | |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| 13 November, 2009 (13.11.09) | 24 November, 2009 (24.11.09) |

| Name and mailing address of the ISA/ | Authorized officer |
|---|---|
| Japanese Patent Office | |
| Facsimile No. | Telephone No. |

Form PCT/ISA/210 (second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005106358 A

- JP 2005125085 A